# Europäisches Patentamt
# European Patent Office
# Office européen des brevets

(19)

(11) Veröffentlichungsnummer: **0 201 049**
**B1**

(12) **EUROPÄISCHE PATENTSCHRIFT**

(45) Veröffentlichungstag der Patentschrift: **25.07.90**

(21) Anmeldenummer: **86105984.8**

(22) Anmeldetag: **30.04.86**

(51) Int. Cl.⁵: **A 01 C 7/06, A 01 C 7/08, A 01 B 49/06, A 01 C 15/04**

(54) Pneumatische Einzelkornsämaschine.

(30) Priorität: 09.05.85 DE 3516742
16.04.86 DE 3546468

(43) Veröffentlichungstag der Anmeldung:
12.11.86 Patentblatt 86/46

(45) Bekanntmachung des Hinweises auf die
Patenterteilung:
25.07.90 Patentblatt 90/30

(84) Benannte Vertragsstaaten:
AT BE CH DE FR GB IT LI LU NL SE

(56) Entgegenhaltungen:
DE-A-3 227 487
DE-B-1 147 437
FR-A-2 371 131
FR-A-2 549 340
US-A-4 047 638
US-A-4 148 414

BECKER; Semoirs de precision pneumatiques
Types Aeromat S et Aeromat

(73) Patentinhaber: Amazonen-Werke H. Dreyer
GmbH & Co. KG
Am Amazonenwerk 9-13
D-4507 Hasbergen-Gaste (DE)

(72) Erfinder: Dreyer, Heinz, Dipl.-Ing. Univ. Dr.
Am Amazonenwerk 7
D-4507 Hasbergen (DE)
Erfinder: Scheufler, Bernd, Dr.
Am Amazonenwerk 101
D-4507 Hasbergen (DE)

(74) Vertreter: Patentanwälte Grünecker, Kinkeldey,
Stockmair & Partner
Maximilianstrasse 58
D-8000 München 22 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine pneumatische Einzelkornsämaschine gemäß des Oberbegriffes des Anspruches 1.

Eine derartige pneumatische Einzelkornsämaschine ist bereits durch den Prospekt "Becker, Semoirs de precision pneumatiques, Types Aeromat S et Aeromat" bekannt geworden. Diese Einzelkornsämaschine weist zwei einzelne Düngervorratsbehälter auf. Die beiden Düngervorratsbehälter sind in einem Abstand zueinander jeweils rechts und links neben dem in der Maschinenmitte angeordneten Gebläse angebracht. Das Gebläse ist direkt an dem Dreipunktbock an der Frontseite der Maschine angeordnet und befindet sich somit unmittelbar hinter dem Schlepper. Eine derartige Anordnung des Gebläses stellt eine sehr große Belastung für den Schlepperfahrer hinsichtlich der Geräuschentwicklung des Gebläses dar. Der Geräuschpegel dieser Gebläse ist derart hoch, so daß der Schlepperfahrer ständig unzumutbaren Belastungen ausgesetzt ist. Als weiterer Nachteil ist das geringe Fassungsvermögen der einzelnen Düngervorratsbehälter anzusehen. Das Fassungsvermögen der Düngerbehälter reicht bei der Aussaat von Mais nur für die Hälfte des Maisvorrates der Einzelkornsämaschine aus. D.h., der Landwirt muß die Düngervorratsbehälter während des Aussäens einer Saatgutbehälterfüllung mit Düngemitteln immer doppelt so oft wie die Saatgutbehälter mit Maissaatgut nachfüllen. Dieses Nachfüllen von Düngemittel ist mit einem unnötigen Zeitaufwand verbunden und macht das Mitführen von Düngemitteln auf einem separaten Wagen zum Nachfüllen der Vorratsbehälter unumgänglich. Des weiteren muß der Landwirt den Füllstand des Düngervorratsbehälters häufiger kontrollieren, damit das gleichzeitige Ausbringen von Saatgut und Düngemitteln immer gewährleistet bleibt und er nicht plötzlich mit leerem Düngervorratsbehälter weiterfährt und somit in nachteiliger Weise keinen Dünger mehr ausstreut.

Weiterhin ist die direkte Anordnung des Gebläses an dem Dreipunktbock an der Frontseite der Einzelkornsämaschine als nachteilig anzusehen, denn hierdurch befindet sich auch der Anschlußpunkt der Gelenkwelle für den Antrieb des Gebläses in dem vorderen Bereich der Maschine. Ein derartig angeordneter Anschlußpunkt erlaubt nur den Einsatz von relativ kurzen Gelenkwellen, so daß es beim Ausheben der Einzelkornsämaschine durch die Dreipunkthydraulik des Schleppers beispielsweise am Vorgewende, bei dem der Antrieb des Gebläses nicht unterbrochen werden darf, d.h., daß Gebläse muß mittels der Gelenkwelle weiter vom Schlepper angetrieben werden, leicht zu Beschädigungen der laufenden Gelenkwelle durch das Überschreiten der maximal zulässigen Abwinklung dieser Gelenkwelle kommt. Durch die Wahl eines derartig im Bereich der Dreipunktkupplungselemente angeordneten Anschlußpunktes für die Gelenkwelle wird das Fahren einer solchen Einzelkornsämaschine sowohl in Alleinbetrieb und vor allem jedoch in Kombination mit einem Bodenbearbeitungsgerät, wobei die einzelnen Maschinen über ein Kupplungsgestänge miteinander verbunden sind, fast unmöglich. Denn die kurze, zwischen dem Bodenbearbeitungsgerät und der Einzelkornsämaschine angeordnete Gelenkwelle gestattet nur ein geringes Anheben der Einzelkornsämaschine mit Hilfe des als hydraulischen Hubrahmen ausgebildeten Kupplungsgestänges gegenüber der Bodenbearbeitungsmaschine, jedoch kein nach vorn versetzen der Einzelkornsämaschine, da sonst die zulässigen maximalen Abwinklungen der Gelenkwelle überschritten werden. Es ist also nicht möglich, eine Verlagerung des Schwerpunktes der Gerätekombination nach vorn und somit eine Reduzierung des erforderlichen Hubkraftbedarfes für den Schlepperkraftheber zu erreichen. Somit kann die gesamte Gerätekombination nur geringfügig aufgrund der begrenzten Hubkraft des Schlepperkrafthebers angehoben werden.

Aus der US—C—4 047 638 ist eine Einzelkornsämaschine bekannt. Bei dieser Einzelkornsämaschine sind ebenfalls mehrere quer zur Fahrtrichtung nebeneinander angeordnete Vorratsbehälter 12 vorgesehen, so daß sich hinsichtlich der Befüllbarkeit dieselben Nachteile ergeben, wie bei dem eingangs erwähnten Prospekt "Becker...". In dieser US-Patentschrift liegt das Gebläse in Fahrtrichtung zwar hinter den einzelnen Vorratsbehältern, dies kann jedoch zur Geräuschminderung nicht beitragen, weil durch die Zwischenräume der einzelnen Vorratsbehälter, selbst wenn die Zwischenräume relativ gering sind, ein Schalldurchtritt und damit eine nur unwesentliche Schalldämpfung zum Zugfahrzeug hin stattfindet. Schließlich ist dieser US—PS nicht zu entnehmen, wie der Antrieb des Gebläses vorgenommen wird. Ein Vorgelegegetriebe im anmeldungsgemäßen Sinne, beispielsweise in der Form einer durchgehenden Welle oder einem Ketten- oder Riemenantrieb, ist nicht gezeigt.

Durch die DE—OS 33 25 971 ist eine aus einer Bodenbearbeitungsmaschine und einer nachlaufenden Walze sowie einer als pneumatischen Sämaschine ausgebildeten Bestellmaschine bestehende Gerätekombination bekannt. Hierbei ist die Bestellmaschine über einen hydraulischen Hubrahmen mit der Bodenbearbeitungsmaschine gekoppelt. An der Bodenbearbeitungsmaschine sind Anschläge angeordnet, die während des Einsatzes der Gerätekombination auf dem Feld den Hubbereich des Hubrahmens nach oben begrenzen, so daß die maximal zulässige Abwinklung der Gelenkwelle nicht überschritten wird, damit die Gelenkwelle weiterlaufen und das Gebläse ohne Unterbrechung angetrieben werden kann. Dieses bedeutet also, daß die Sämaschine etwas gegenüber der Bodenbearbeitungsmaschine angehoben werden kann, jedoch nicht nach vorn versetzt wird. Es wird keine Verlagerung des Schwerpunktes der Gerätekombination nach vorn und somit keine Reduzierung des erforderlichen Hubkraftbedarfes für den Schlepperkraftheber erreicht. Somit kann die gesamte Gerätekombination nur geringfügig aufgrund der begrenzten Hubkraft des Schlepperkrafthebers angehoben werden.

Der Erfindung liegt nun die Aufgabe zugrunde, in einfachster Weise eine vorteilhafte Anordnung des Gebläses einer Einzelkornsämaschine in der Kombination mit einem Düngerstreuer zu schaffen, wobei gleichzeitig eine vorteilhafte Weiterbildung des Düngervorratsbehälters erreicht wird.

Diese Aufgabe wird erfindungsgemäß durch den kennzeichnenden Teil des Anspruches 1 gelöst. Infolge dieser Maßnahme wird eine vorteilhafte Anordnung des Gebläses einer Einzelkornsämaschine geschaffen und der Anschlußpunkt für die Gelenkwelle in vorteilhafter Weise nach hinten verlagert. Die geschlossene Vorderfront, die sich durch den durchgehenden Vorratsbehälter ergibt, führt zu einer wesentlichen Schalldämpfung des vom Gebläse erzeugten Geräuschpegels und stellt eine große Entlastung hinsichtlich der Geräuschentwicklung des Gebläses für den Schlepperfahrer dar. Das Fassungsvermögen des durchgehenden Vorratsbehälters ist gegenüber den geteilten Vorratsbehältern entscheidend vergrößert, so daß die in dem durchgehenden Vorratsbehälter mitgeführte Düngermenge durchaus für die Aussaat einer Saatgutbehälterfüllung ausreicht. Hierdurch entfällt das zwischenzeitliche, zeitraubende Nachfüllen des Düngervorratsbehälters. Die durchgehende Ausbildung des Düngervorratsbehälters, sowie die Anordnung des Gebläses hinter dem Vorratsbehälter erlauben zudem eine einfache, unkomplizierte Trennung der gesamten, im Düngervorratsbehälter integrierten Düngerstreueinrichtung von den Einzelkornsäaggregaten. Hierdurch läßt sich die als Reihenstreuvorrichtung ausgebildete Düngerstreueinrichtung auch solo, beispielsweise zum Spätdüngen der Maispflanzen einsetzen, indem die Düngerstreueinrichtung auf einfachste Weise von dem Tragrahmen, an dem die Einzelkornsäaggregate angelenkt sind, trennbar ist. Infolge dieser Maßnahme entsteht ein Mehrzweckgerät, wobei die Möglichkeit besteht, die aus zwei einzelnen Baugruppen zusammengesetzte Kombination aus einer Einzelkornsämaschine und einer Düngerstreuvorrichtung auch jeweils getrennt voneinander einzusetzen.

Die erfindungsgemäße Ausführungsform sieht vor, daß das Vorgelegegetriebe zwischen dem Gebläse und dem Düngerbehälter angeordnet ist. Infolge dieser Maßnahmen ergibt sich ein vorteilhafter Anschlußpunkt für die Gelenkwelle, über die das Gebläse vom Schlepper aus angetrieben wird. Durch die Verlagerung des Gebläses hinter den Düngervorratsbehälter wird der Anschlußpunkt des in Fahrtrichtung gesehen vor dem Gebläse angeordneten Vorgelegegetriebes in besonders vorteilhafter Weise nach hinten verlagert. Hierdurch kann das Vorgelegegetriebe mittels einer relativ langen Gelenkwelle angetrieben werden, so daß sich beim Ausheben der pneumatischen Einzelkornsämaschine, bei der das Gebläse unbedingt weiter angetrieben werden muß, sehr vorteilhafte kleine und flache Abwinklungen der Gelenkwelle ergeben. Die von den Gelenkwellenherstellern vorgegebenen Abwinklungen werden hierbei nicht überschritten, so daß keine Gelenkwellenschäden durch große Abwinklungen bei laufender Gelenkwelle entstehen können.

In einer Ausführungsform ist erfindungsgemäß vorgesehen, daß die Eingangswelle des Vorgelegegetriebes unterhalb der waagerechten Ebene, die durch den untersten Bereich des Düngerbehälters verläuft, liegt. Infolge dieser Maßnahme wird ein genügend großer Freiraum für den Schwenkbereich der Gelenkwelle beim Ausheben der Maschine geschaffen. Durch eine entsprechende Wahl des Anschlußpunktes für die Gelenkwelle ist auch ein totales Ausheben bei nicht angetriebener Gelenkwelle in Transportstellung möglich, ohne daß dieses zu einem unzulässigen Abknicken der Gelenkwelle führt. Weiterhin läßt sich diese Einzelkornsämaschine in besonders vorteilhafter Weise mit einer Bodenbearbeitungsmaschine kombinieren.

In einer anderen Ausführungsform ist erfindungsgemäß vorgesehen, daß sich im Bereich der Eingangswelle des Vorgelegegetriebes eine Aussparung im unteren Bereich des Düngerbehälters befindet. Hierdurch wird eine Reduzierung der Bauhöhe, des durch den nach unten versetzen Behälters erreicht, wobei die Beibehaltung des optimalen Anschlußpunktes für die Gelenkwelle gewährleistet ist, so daß der große Schwenkbereich der Gelenkwelle nicht eingeschränkt wird. Ein Ausheben der Maschine ist somit sowohl bei laufender Gelenkwelle während des Sävorganges als auch bei nicht angetriebener Gelenkwelle beim Überführen in die Transportstellung gewährleistet und ohne Beschädigungen der Gelenkwelle durchführbar.

In einer speziellen Ausführungsform, bei der die Einzelkornsämaschine über einen hydraulischen Hubrahmen hinter einer Bodenbearbeitungsmaschine angeordnet ist, ist erfindungsgemäß vorgesehen, daß der Anschlußpunkt der Gelenkwelle an der Einzelkornsämaschine derart nach hinten versetzt ist, daß die Einzelkornsämaschine mit angetriebener Gelenkwelle über zumindest die Hälfte des gesamten Hubbereiches des hydraulischen Hubrahmens aushebbar ist, wobei die Abwinklung der laufenden Gelenkwelle die zulässigen Grenzen nicht überschreitet. Infolge dieser Maßnahme wird der Hubkraftbedarf zum vollen Ausheben der Gerätekombination mit der Schlepperhydraulik erheblich reduziert, so daß der gesamte Hubbereich des Schlepperkrafthebers ausgenutzt werden kann. Weiterhin erfolgt keine Abwinklung der Gelenkwelle über die von den Gelenkwellenherstellern vorgegebenen Abwinklungen, so daß keine Gelenkwellenschäden durch große Abwinklungen bei laufender Gelenkwelle entstehen können.

In der europäischen Patentanmeldung, Anmeldenr. 86 105983.0, Veröffentlichungsnr. EP—A—02 01 048, auf die hier verwiesen wird, wird eine geschlossene Gerätekombination für die Landwirtschaft beansprucht, bei der eine Bestellmaschine über einen hydraulischen Hubrahmen hinter einer Bodenbearbeitungsmaschine angeordnet ist. Der Anschlußpunkt der Gelenkwellen der Bestellmaschine wird derart nach hinten versetzt, daß die Bestellmaschine mit angetriebener Gelenkwelle über zumindest die Hälfte des gesamten Hubbereichs des Hubrahmens aushebbar ist, wobei die Abwinkelung der laufenden Gelenkwelle die zulässigen Grenzen nicht überschreitet.

Weitere Einzelheiten sind der Beispielsbeschreibung und den Zeichnungen zu entnehmen. Hierbei zeigen

Fig. 1 die erfindungsgemäß ausgebildete Kombination aus Einzelkornsämaschine und Düngerstreueinrichtung in der Seitenansicht,

Fig. 2 die Maschine gemäß Fig. 1 in der Ansicht von vorne,

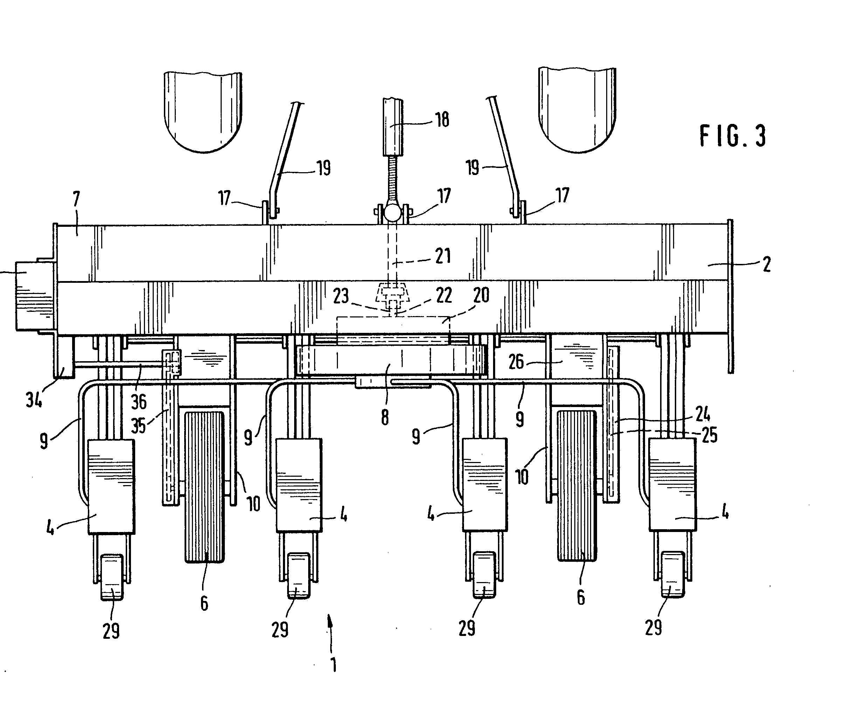

Fig. 3 die Maschine gemäß Fig. 1 in einem anderen Maßstab in der Draufsicht,

Fig. 4 eine andere Ausführungsform der erfindungsgemäßen Kombination aus Einzelkornsämaschine und Düngerstreueinrichtung in der Seitenansicht,

Fig. 5 die Maschine gemäß Fig. 4 in der Ansicht von vorne und

Fig. 6 die erfindungsgemäße Einzelkornsämaschine mit Düngerstreueinrichtung in der Kombination mit einem Bodenbearbeitungsgerät in Betriebsstellung und in der Seitenansicht.

Die Bestellmaschine ist als zapfwellengetriebene, pneumatische Einzelkornsämaschine 1 mit Düngerstreueinrichtung 2 ausgebildet und weist den Tragrahmen 3 auf, an dem die einzelnen Einzelkornsäaggregate 4, der Dreipunktanbaubock 5, die Laufräder 6 sowie der durchgehende Düngervorratsbehälter 7 der Düngerstreueinrichtung 2, hinter dem das Gebläse 8 befestigt ist, angeordnet sind. Über die Schläuche 9 sind die Einzelkornsäaggregate 4 mit dem Gebläse 8 verbunden. Während des Antriebes stützt sich die Einzelkornsämaschine 1 über die Laufräder 6 auf dem Boden ab.

Die einzelnen Einzelkornsäaggregate 4 sowie die zwischen zwei Einzelkornsäaggregaten 4 in den Tragarmen 10 jeweils drehbar gelagerten Laufräder 6 sind mit Hilfe von Klemmelementen 11 verschiebbar am Tragrahmen 3 angeordnet, so daß sich unterschiedliche Reihenweiten einstellen lassen. An der den Einzelkornsäaggregaten 4 abgewandten Seite sind die Befestigungslaschen 12 am Tragrahmen 3 angeschweißt. An diesen Befestigungslaschen 12 ist mit Hilfe der Schrauben 13 die Konsole 14 befestigt, an der Bauteile des durchgehenden Düngervorratsbehälters 7 der Düngerstreueinrichtung 2 angeschweißt sind. Über die senkrechten Streben 15 ist die Konsole 14 mit dem Querträger 16 verbunden. Der Querträger 16 ist Bestandteil des Vorratsbehälters 7 und erstreckt sich über seine gesamte Breite. An den Streben 15 und am Querträger 16 sind die Dreipunktkupplungselemente 17 des Dreipunktanbaubockes 5 für den Anschluß des Oberlenkers 18 und der Unterlenker 19 des Schlepperkrafthebers des Schleppers angeordnet.

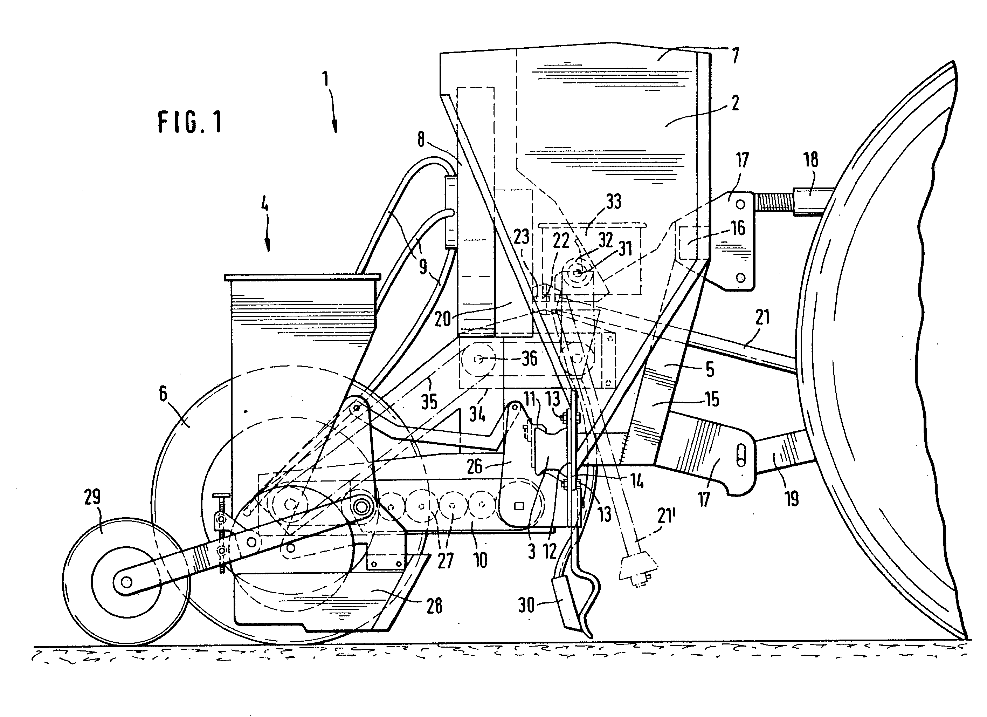

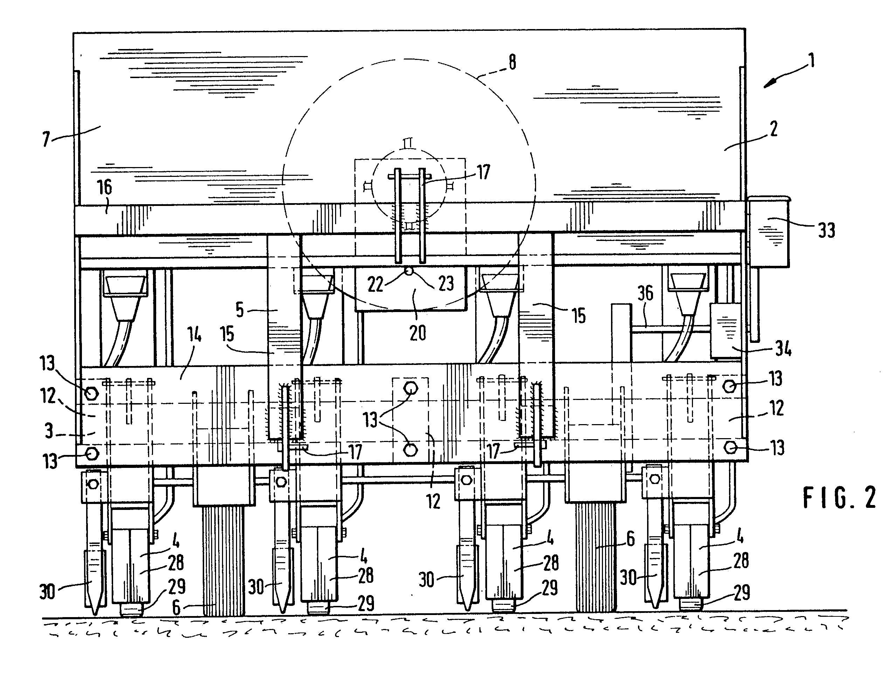

Das in der Maschinenmitte hinter dem Vorratsbehälter 7 an dem Tragrahmen 3 befestigte Gebläse 8 wird über das zwischen dem Gebläse 8 und dem Düngerbehälter 7 angeordnete Vorlegegetriebe 20 mit Hilfe der Gelenkwelle 21 von der Schlepperzapfwelle angetrieben. Die Eingangswelle 22, die den Anschlußpunkt 23 für die Gelenkwelle 21 bildet, liegt gemäß der Fig. 1 und 2 unterhalb der waagerechten Ebene, die durch den untersten Bereich des Düngerbehälters 7 verläuft. Hierdurch wird ein ausreichender Schwenkbereich für die Gelenkwelle 21 geschaffen, so daß die Maschine ganz ausgehoben werden kann, ohne daß es zu Beschädigungen der Gelenkwelle 21 kommt. Die Gelenkwelle 21 läßt sich bis in die mit strichpunktierten Linien dargestellte Position 21' verschwenken.

Der Antrieb der Vereinzelungsorgane der Einzelkornsäaggregate 4 erfolgt in bekannter Weise von dem rechten Laufrad 6, daß in den Tragarmen 10 drehbar gelagert ist. Mit Hilfe einer als Kettengetriebe ausgebildeten Übertragungseinrichtung 24 treibt das Laufrad 6 über die Kette 25 die Eingangswelle des auf dem rechten Tragarm 10 angeordneten, als Kettengetriebe ausgebildeten Regelgetriebes 26 an. Die Antriebswelle des Regelgetriebes 26 ist über die aus einzelnen Zahnrädern 27 bestehende Übertragungseinrichtung mit den einzelnen Vereinzelungsorganen der Einzelkornsäaggregate 4 verbunden. Durch Veränderung des Übersetzungsverhältnisses des Regelgetriebes 26 läßt sich eine Veränderung des Ablageabstandes des Saatgutes herbeiführen. Die Vereinzelung des Saatgutes erfolgt in bekannter Weise, wobei das Saatgut ebenfalls in bekannter Weise mit Hilfe der Säschare 28 im Boden abgelegt und von der Andrückrolle 29 angedrückt wird.

Die Düngerstreueinrichtung 2 weist neben dem durchgehenden Düngervorratsbehälter 7 noch die jedem Einzelkornsäaggregat 4 jeweils zugeordneten Düngerschare 30 auf, die in bezug auf die Säschare 28 der Einzelkornsäaggregate 4 derart angeordnet sind, daß sie die Düngemittel neben das Saatgut ablegen. Diesen Düngerscharen 30 werden die sich im Vorratsbehälter 7 befindlichen Düngemittel über die auf der Dosierwelle 31 angeordneten Dosierorgane 32 in genau einstellbaren Mengen zugeführt. Die Einstellung der Düngerausbringmenge wird über das stufenlose Regelgetriebe 33 vorgenommen, das neben dem Vorratsbehälter 7 angeordnet ist. Der Antrieb des Regelgetriebes 33 erfolgt über das Vorlegegetriebe 34 vom linken Laufrad 6, wobei die Antriebskette 35 die Verbindung zwischen dem Laufrad 6 und der Eingangswelle 36 des Vorlegegetriebes 34 darstellt.

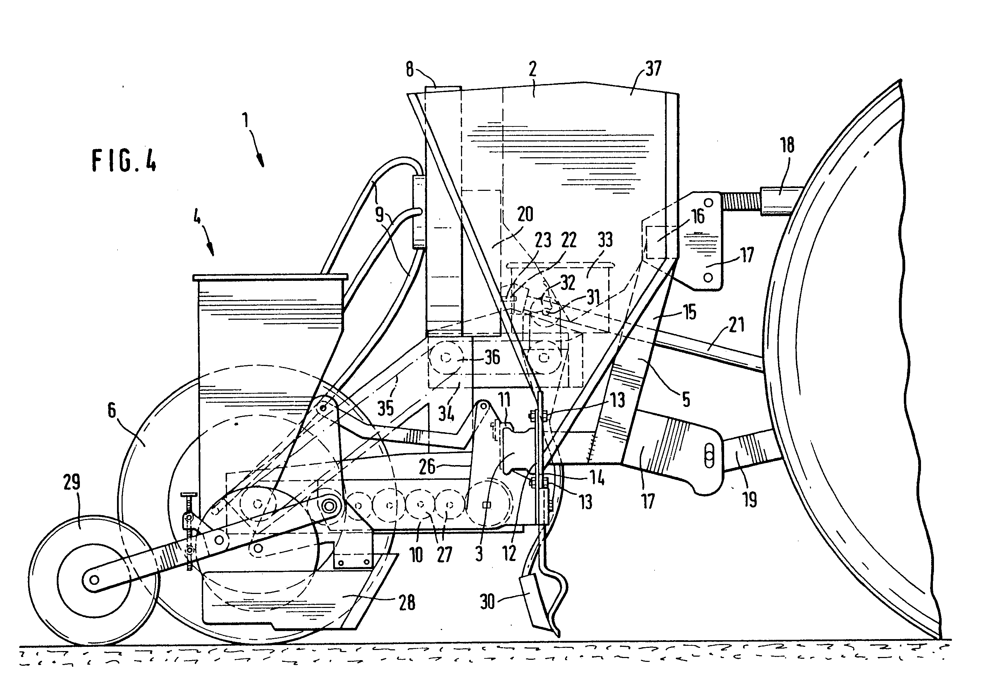

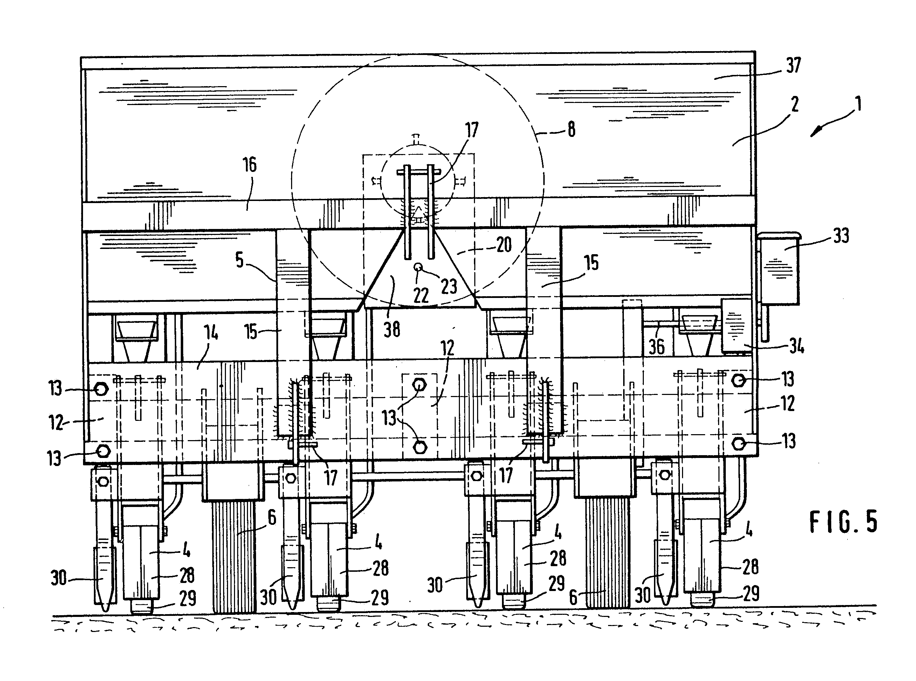

Die Einzelkornsämaschine 1 mit der Düngerstreueinrichtung 2 gemäß der Fig. 4 und 5 unterscheidet sich nur in der geringeren Bauhöhe des Düngervorratsbehälters 37, bei gleichem Fassungsvermögen des Behälters gegenüber dem Ausführungsbeispiel gemäß der Fig. 1 und 2. Der Düngervorratsbehälter 37 wurde herabgelassen, wobei die Gebläseanordnung unverändert bleibt.

Da der Anschlußpunkt 23 für die Gelenkwelle 21 durch den herabgelassenen Vorratsbehälter 37 verdeckt würde, weist der Vorratsbehälter 37 im Bereich der Eingangswelle 22 des Vorgelegegetriebes 20 eine Aussparung 38 im unteren Bereich des Düngerbehälters 37 auf, wodurch ebenfalls ein ausreichender Schwenkbereich für die Gelenkwelle 21 geschaffen wird.

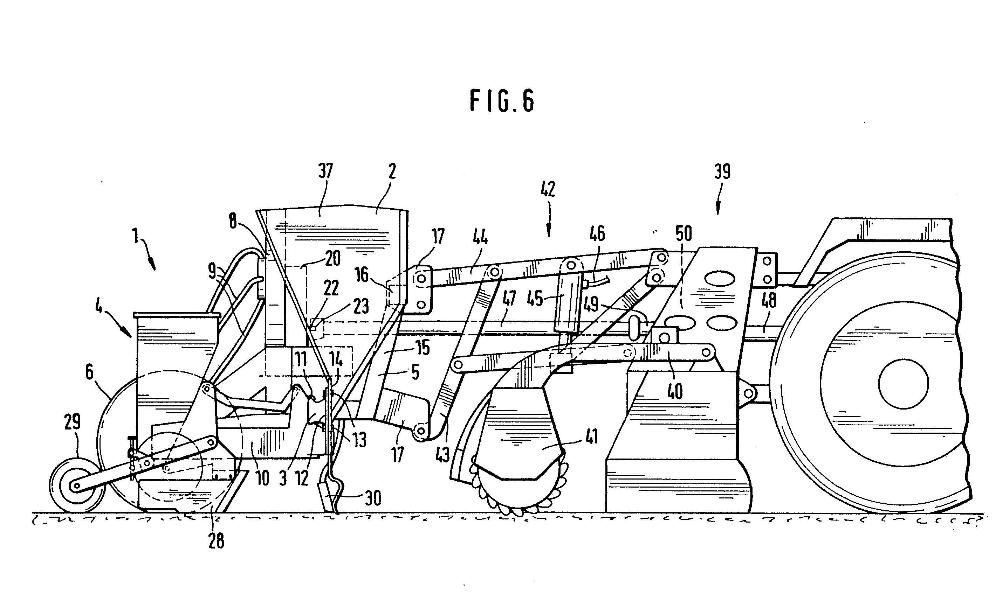

Die Fig. 6 zeigt eine Gerätekombination. Die Gerätekombination besteht aus einem zapfwellengetriebenen und als Kreiselegge 39 ausgebildeten Bodenbearbeitungsgerät, einer mit der Kreiselegge 39g über die Arme 40 verbundenen Bodenwalze 41 und einer zapfwellengetriebenen und als pneumatische Einzelkornsämaschine 1 mit der Düngerstreueinrichtung 2 gemäß der Fig. 4 und 5 ausgebildeten Bestellmaschine. Die Einzelkornsämaschine 1 mit der Düngerstreueinrichtung 2 ist über die als Hubrahmen 42 ausgebildeten Kupplungsteile mit der Kreiselegge 39 verbunden. Der Hubrahmen 42 weist die beiden Unterlenker 43 und den Oberlenker 44 auf. Mit Hilfe des Hydraulikzylinders 45, der über die Leitung 46 mit dem Hydraulikkreislauf, an dem auch der Hydraulikkreislauf des Dreipunktkrafthebers des Schleppers angeschlossen ist, gekoppelt ist, ist der Hubrahmen 42 in aufrechter Ebene schwenkbar, so daß die Einzelkornsämaschine 1 mit der Düngerstreueinrichtung 2 auszuheben ist.

Während des Einsatzes der Gerätekombination nimmt diese die in der Fig. 6 dargestellte Position ein, wobei die Gelenkwellen 47 und 48 praktisch keine bzw. nur sehr geringe Abwinklungen aufweisen, so daß keine Beschädigungen an den laufenden Gelenkwellen 47 und 48 auftreten, d.h. also, daß der Zapfwellendurchtrieb 49 des Kreiseleggengetriebes 50 und der Anschlußpunkt 23 des Vorgelegegetriebes 20 annähernd auf gleicher Höhe sind.

Beim Wendevorgang am Feldende wird die Gerätekombination ausgehoben, wobei die Einzelkornsämaschine 1 mit der Düngerstreueinrichtung 2 mit Hilfe des Hydraulikzylinders 45 gegenüber dem Bodenbearbeitungsgerät derart weit nach vorne oben angehoben wird, so daß eine Verlagerung des sich weit hinter dem Schlepper befindlichen Schwerpunktes der Gerätekombination in Richtung auf den Schlepper erfährt und bewirkt somit eine deutliche Reduzierung der erforderlichen Hubkräfte beim Ausheben der Gerätekombination.

Infolge der Verlagerung des Anschlußpunktes 23 des Vorgelegegetriebes 20 hinter den Bereich des Dreipunktanbaubockes 5, bei gleichzeitiger Schaffung eines großen Schwenkbereiches für die Gelenwelle 21 läßt sich die Einzelkornsämaschine 1 mit Düngerstreueinrichtung 2 in besonders vorteilhafter Weise nach vorne oben verschwenken, ohne daß es bei angetriebener Gelenkwelle zu keinen Beschädigungen an dieser Gelenkwelle kommt.

Soll die Düngerstreueinrichtung 2 zum Spätdüngen der Maispflanzen eingesetzt werden, läßt sich diese Düngerstreueinrichtung 2 in besonders vorteilhafter Weise von der Einzelkornsämaschine 1 trennen. Hierzu löst man in einfacher Weise die Schrauben 13, die die Konsole 14 mit den Befestigungslaschen 12 des Tragrahmens 3 verbinden. Weiterhin wird die Eingangswelle 36 des Vorgelegegetriebes 34 für das stufenlose Regelgetriebe 33 der Düngerstreueinrichtung 2 vom linken Tragarm 10 des Laufrades 6 gelöst. Hiernach läßt sich die Düngerstreueinrichtung 2 mit Hilfe des Schleppers einfach von der Einzelkornsämaschine 1 trennen. Nachdem eine separate Antriebsvorrichtung für den Antrieb des stufenlosen Regelgetriebes 33 an der Düngerstreueinrichtung 2 angeflanscht ist, kann die Düngerstreueinrichtung 2 als Solomaschine zum Spätdüngen der Maispflanzen eingesetzt werden.

**Patentansprüche**

1. Pneumatische Einzelkornsämaschine mit einem Gebläse (8) und Düngervorratsbehältern (7, 37), vor den Sääggregaten (4) der Einzelkornsämaschine angeordnet sind, dadurch gekennzeichnet daß die Düngervorratsbehälter (7, 37) zu einem durchgehenden Behälter (7, 37) zusammengefaßt sind, daß das Gebläse (8) hinter dem durchgehenden Behälter (7, 37) angeordnet ist, und daß das Gebläse (8) über ein Vorgelegegetriebe (20) angetrieben wird.

2. Einzelkornsämaschine nach Anspruch 1, dadurch gekennzeichnet, daß das Vorgelegegetriebe (20) zwischen dem Gebläse (8) und dem Düngerbehälter (7, 37) angeordnet ist.

3. Einzelkornsämaschine nach Anspruch 1 oder 2, dadurch gekennzeichnet, daß die Eingangswelle (22) unterhalb der waagerechten Ebene, die durch den untersten Bereich des Düngerbehälters (7) verläuft, liegt.

4. Einzelkornsämaschine nach Anspruch 2, dadurch gekennzeichnet, daß im Bereich der Eingangswelle (22) des Vorgelegegetriebes (20) eine Aussparung (38) im unteren Bereich des düngerbehälters (37) sich befindet.

5. Einzelkornsämaschine nach Anspruch 1, wobei die Einzelkornsämaschine (1) über einen hydraulischen Hubrahmen (42) hinter einer Bodenbearbeitungsmaschine (39, 41) angebaut ist, dadurch gekennzeichnet, daß der Anschlußpunkt (23) der Gelenkwelle (47) an der Edinzelkornsämaschine (1) derart nach hintern versetzt ist, daß die Einzelkornsämaschine (1) mit angetriebener Gelenkwelle (47) über zumindest die Hälfte des gesamten Hubbereiches des hydraulischen Hubrahmens (42) aushebbar ist, wobei die Abwinklung der laufenden Gelenkwelle (47) die zulässigen Grenzen nicht überschreitet.

6. Einzelkornsämaschine nach wenigstens einem der vorangegangenen Ansprüche, dadurch gekennzeichnet, daß der durchgehende Behälter (7, 37) sich über die Breite der Einzelkornsämaschine erstreckt.

7. Einzelkornsämaschine nach wenigstens einem der vorangegangenen Ansprüche dadurch gekennzeichnet, daß die Breite des durchgehenden Behälters (7, 37) mehr als das Doppelte der Breite des Gebläses (8) quer zur Fahrtrichtung beträgt.

8. Einzelkornsämaschine nach weinigstens einem der vorangegangenen Ansprüche, dadurch gekennzeichnet, daß die Breite des Vorratsbehälters mehr als das Doppelte des Abstandes der Unterlenkeranschlußpunkte (17) beträgt.

**Revendications**

1. Semoir pneumatique monograine comportant une soufflante (8) et des réservoirs de réserve d'engrais (7, 37), disposés devant les groupes semeurs (4) du semoir monograine, caractérisé en ce que les réservoirs de réserve (7, 37) sont groupés en constituant un réservoir disposé transversalement (7, 37), en ce que la soufflante (8) est disposée derrière le réservoir (7, 37), et en ce que la soufflante (8) est entraînée par l'intermédiaire d'une transmission intermédiaire (20).

2. Semoir pneumatique monograine selon la revendication 1, caractérisé en ce que la transmission intermédiaire (20) est disposée entre la soufflante (8) et le réservoir d'engrais (7, 37).

3. Semoir pneumatique monograine selon la revendication 1 ou 2, caractérisé en ce que l'arbre d'entrée (22) est disposé au-dessous du plan horizontal s'étendant dans la zone la plus basse du réservoir d'engrais (7).

4. Semoir pneumatique monograine selon la revendication 2, caractérisé en ce qu'un évidement (38) se trouve dans la zone inférieure du réservoir d'engrais (37), dans la zone de l'arbre d'entrée (22) de la transmission intermédiaire (20).

5. Semoir pneumatique monograine selon la revendication 1, le semoir monograine (1) étant accolé sur un châssis de levage (42) hydraulique, derrière une machine de traitement de sol (39, 41) caractérisé en ce que le point de raccordement (23) de l'arbre articulé (47) sur le semoir monograine (1) est décalé vers l'arrière, de façon que le semoir monograine (1) avec l'arbre articulé (47) entraîné soit relevable sur au moins la moitié de la totalité de la plage de relevage hydraulique (42), le débattement angulaire de l'arbre articulé (47) en rotation ne dépassant pas les limites admises.

6. Semoir pneumatique monograine selon au moins l'une des revendications précédentes, caractérisé en ce que le réservoir (7, 37) s'étend sur toute la largeur du semoir monograine.

7. Semoir pneumatique monograine selon au moins l'une des revendications précédentes, caractérisé en ce que la largeur du réservoir (7, 37) est supérieure au double de la largeur de la soufflante (8), dans le sens transversal par rapport au sens d'avancement.

8. Semoir pneumatique monograine selon au moins l'une des revendications précédentes, caractérisé en ce que la largeur du réservoir de réserve est supérieure au double de la largeur de l'écartement entre les points de raccordement des bras articulés inférieurs (17).

**Claims**

1. Pneumatic seed drill for sowing single seeds, including a fan (8) and fertilizer hoppers (7, 37), which are disposed in front of the sowing assemblies (4) of the seed drill for sowing single seeds characterised in that the fertilizer hoppers (7, 37) are combined to form one continuous container (7, 37); in that the fan (8) is disposed behind the continuous container (7, 37); and in that the fan (8) is driven via the intermediary of a reduction gear (20).

2. Seed drill for sowing single seeds according to claim 1, characterised in that the reduction gear (20) is disposed between the fan (8) and the fertilizer container (7, 37).

3. Seed drill for sowing single seeds according to claim 1 or 2, characterised in that the primary shaft (22) is situated below the horizontal plane which extends through the lowermost region of the fertilizer container (7).

4. Seed drill for sowing single seeds according to claim 2, characterised in that a recess (38) in the lower region of the fertilizer container (37) is provided in the region of the primary shaft (22) of the reduction gear (20).

5. Seed drill for sowing single seeds according to claim 1, wherein the seed drill for sowing single seeds (1) is mounted behind a ground cultivating machine (39, 41) via the intermediary of a hydraulic lifting frame (42), characterised in that the point of attachment (23) of the universal-joint shaft (47) to the seed drill for sowing single seeds (1) is offset rearwardly in such a manner that the seed drill for sowing single seeds (1) can be lifted clear, with a driven universal-joint shaft (47), over at least half the entire lifting range of the hydraulic lifting frame (42), the angle of the rotary universal-joint shaft (47) not exceeding the permitted limits.

6. Seed drill for sowing single seeds according to at least one of the preceding claims, characterised in that the continuous container (7, 37) extends over the width of the seed drill for sowing single seeds.

7. Seed drill for sowing single seeds according to at least one of the preceding claims, characterised in that the width of the continuous container (7, 37) is more than double the width of the fan (8) at right angles to the direction of travel.

8. Seed drill for sowing single seeds according to at least one of the preceding claims, characterised in that the width of the hopper is more than double the spacing between the supporting arm attachment points (17).

FIG.1

FIG. 2

EP 0 201 049 B1

FIG. 3

EP 0 201 049 B1

FIG.4

EP 0 201 049 B1

FIG.5

EP 0 201 049 B1

# FIG.6

EP 0 201 049 B1